Europäisches Patentamt

European Patent Office

Office européen des brevets

(11) Publication number: **0 224 168**
**A2**

(12) # EUROPEAN PATENT APPLICATION

(21) Application number: 86115928.3

(51) Int. Cl.4: **G06F 12/10**

(22) Date of filing: 17.11.86

(30) Priority: 19.11.85 JP 259447/85

(43) Date of publication of application:
03.06.87 Bulletin 87/23

(84) Designated Contracting States:
DE FR GB

(71) Applicant: **HITACHI, LTD.**
**6, Kanda Surugadai 4-chome**
**Chiyoda-ku Tokyo 101(JP)**

(72) Inventor: **Kubo, Kanji**
**43-53, Sanya**
**Hadano-shi(JP)**

(74) Representative: **Patentanwälte Beetz sen. -**
**Beetz jun. Timpe - Siegfried -**
**Schmitt-Fumian**
**Steinsdorfstrasse 10**
**D-8000 München 22(DE)**

(54) **Buffer storage control system.**

(57) The buffer storage control system has a buffer storage data section (5) for retaining a copy of a portion of data stored in the main storage (13) and the buffer storage data section is accessed by use of an address also including N low-order bits of the logical address portion to be translated into a real address. The control system has $2^N$ directories (40, 41) for the buffer storage data section indicating whether the data at an address for which an access is requested has been retained in the data section or not be use of a match/unmatch signal. When a directory other than the directory specified by the pattern of the N bits at a data read request issues a match signal, the content of the directory (40, 41) that has issued the match signal is invalidated.

EP 0 224 168 A2

FIG. 3

## BUFFER STORAGE CONTROL SYSTEM

### BACKGROUND OF THE INVENTION

The present invention relates to a buffer storage control system, and in particular, to a buffer storage control system capable of accessing a buffer storage by use of a logical address.

In a computer system having a buffer storage, the hit ratio of the buffer storage is generally increased and hence the average instruction time of the system is reduced as the buffer storage capacity is increased. However, in a computer system adopting the virtual storage system, the number of bits of an address used by the buffer storage is restricted.

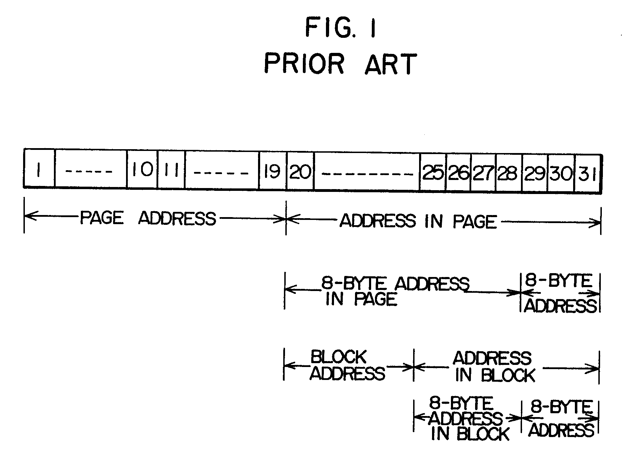

For example, as shown in FIG. 1, in a virtual storage system in which an address is represented by bits 1-31 and a page comprises 4 K bytes, the bits 1-19 of the logical address is to be subjected to an address translation and the bits 20-31 are the portion identical to the real address.

Since the conventional buffer storage is accessed by use of a real address, when the address translation lookaside buffer and the buffer storage are read at the same time, the address range available for the buffer storage is 4 K bytes represented by the bits 20-31 of a logical address. To increase the capacity, the number of rows must be increased, which causes an increase of the compare circuits and the circuit system to be complicated; consequently, the cost of the system is increased. In addition, due to a problem associated with the placement or mounting of circuit components, the number of rows cannot be increased to an extreme extent.

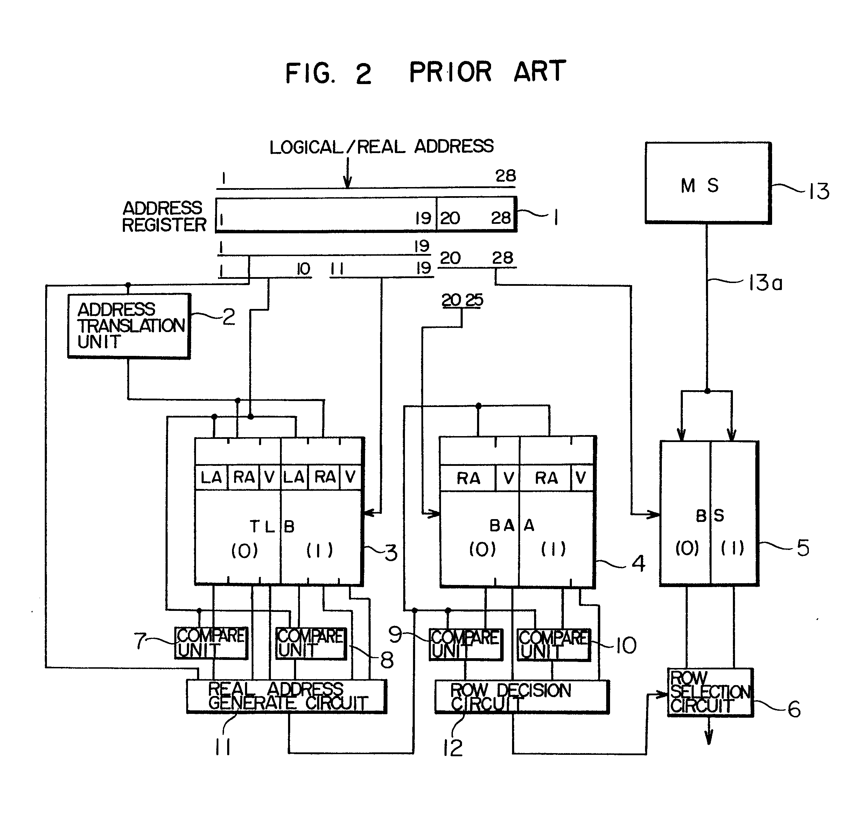

FIG. 2 is a block diagram illustrating a prior art example in which the buffer storage is accessed by use of a real address. The system of FIG. 2 includes an address register 1, an address translation unit 2, an address translation lookaside buffer - (TLB), a directory (buffer address array) 4 and a data section 5 of a buffer storage, a row selection circuit 6, compare circuits 7-10, a real address generate circuit 11, and a row decision circuit 12. In the following description, an address is assumed to be represented by bits 1-31 as shown in FIG. 1 and the buffer storage data section (BS) 5 is assumed to perform a data read operation in 8-byte units.

The address register 1 is used to store bits 1-28 of a logical address, which is an 8-byte unit address. If the page size is 4 K bytes, the bits 1-19 constitute a page address and the bits 20-28 indicate an address in page (an 8-byte unit address in page), which is identical to the real address. The low-order bits 11-19 of the page address indicate a column address of the TLB 3, which specifies a column. The high-order bits 1-10 of a page address of a logical address portion (LA) stored in two entries of the specified column is compared with the bits 1-10 from the address register 1 in the compare circuits 7-8. The result of this comparison is transferred to the real address generate circuit 11 together with the real address portion (RA) and the valid bit (V) of each entry of the column. The real address generate circuit 11 selects the real address portion of the entry for which the matching is satisfied and the valid bit is "1".

As described above, the page address is translated into a real address in the TLB 3 at a high speed and the bits 1-19 of the real address are sent to the compare circuits 9-10 of the buffer storage directory (BAA) 4. If the matching is not satisfied in the compare circuits 7-8, the translation into a real address is accomplished by use of the address translation unit, 2 which has been commonly known and is not directly related to the present invention; consequently, description thereof will be omitted. The portion of the address in page associated with a logical address is identical to the real address and the bits 20-28 thereof are used as a column address in the directory 4 and the buffer storage data section 5.

If the block size is 64 bytes, since the directory retains a block-unit address, the six bits including bits 20-25 of a logical address are used as a column address of the directory 4. When the buffer storage data section 5 executes a data read operation in 8-byte units, the bits 20-28 are used as the column address. Since the number of rows in this case is assumed to be two for the directory 4 and the buffer storage data section 5, the capacity of the buffer storage unit is 8 K bytes.

By use of the bits 20-25 of the address register 1, the entry of each row of the column is simultaneously read from the directory 4. These entries each include the bits 1-19 of the real address (RA) and a validity (V) bit. The real addresses read from the directory 4 are delivered to the compare circuits 9 and 10 and are compared with the real address supplied from the TLB 3. The result of the comparison and the validity bit of the entry are respectively inputted to the row decision circuit 12 so as to determine the row for which the matching takes place, namely, the comparison results in the matching and the validity bit is "1". An output from the row decision circuit 12 is sent to the row select circuit 6 which selects on 8-byte data of each row read from the buffer storage data section 5, thereby selecting and outputting the read data of the buffer storage data section 5 corresponding to the row for which the matching condition has been satisfied in the compare operation. In the reference of the directory 4, if the matching condition is not satisfied in any row, a block transfer is achieved to read a block from the main storage 13 and the block is written via a data path 13b into the buffer storage data section 5. At the same time, the real address translated in the TLB 3 is written in a row of the pertinent column of the directory 4 and the validity bit is set to "1".

In FIG. 2, the TLB 3, the directory 4, and the buffer storage data section 5 are simultaneously accessed and thereafter the real address comparison, the row decision, and the row selection are achieved. There provisions serve to effect a high-speed data read operation on the buffer storage data section 5, and such a configuration has been generally adopted these days.

As described above, in a computer system using the virtual storage system, the number of bits of an address used in the buffer storage is restricted.

As methods to solve above-mentioned problems, methods for referencing the buffer storage by use of a page address portion of a logical address have been disclosed in the JP-A-56-16982, JP-A-56-140575, and JP-A-57-88586. According to the technology of the JP-A-56-16982, when the hit does not occur, the logical address must be changed to access the buffer storage again, and hence if the capacity is increased, the number of the accesses is also increased. The technology described in the JP-A-56-140575 and the JP-A-57-88586 is based on a method for accessing the directory by use of a real address, and hence the problem described above does not take place; however, since the technology is associated with a buffer storage (cache) of the store-in system, if a hit (to be referred to as a synonim hit) occurs for other than the entry specified by the N low-order bits of the page address portion, it is required to read again the data for which the synonim hit occurs in the buffer storage.

## SUMMARY OF THE INVENTION

It is therefore an object of the present invention to provide a buffer storage control system in a computer system referencing a buffer storage by use of a logical address for increasing the access speed to access the buffer storage at a synonim hit.

According to the present invention, when a synonim hit is detected in a buffer storage for a data read operation, the block on which the synonim hit has occurred is invalidated and is read from the main storage so as to be registered to a location of the buffer storage specified by the logical address; whereas, in a store operation, the data is stored in the block on which the synonim hit has occurred. The present invention is particularly effective to the buffer storage control of the store-through method in which the data is stored only in the main storage if the buffer storage does not include a block having the data to be stored; otherwise, the data is stored in both the buffer storage and the main storage.

## BRIEF DESCRIPTION OF THE DRAWINGS

The present invention will be apparent from the following detailed description taken in conjunction with the accompanying drawings in which:

FIG. 1 is a schematic diagram illustrating the bit configuration of an address;

FIG. 2 is a schematic block diagram depicting the conventional example of the buffer storage control system;

FIG. 3 is a schematic block diagram showing an embodiment of the present invention; and

FIG. 4 is a block diagram illustrating a concrete example of the row decision and column address generate circuit of FIG. 3.

## DESCRIPTION OF THE PREFERRED EMBODIMENTS

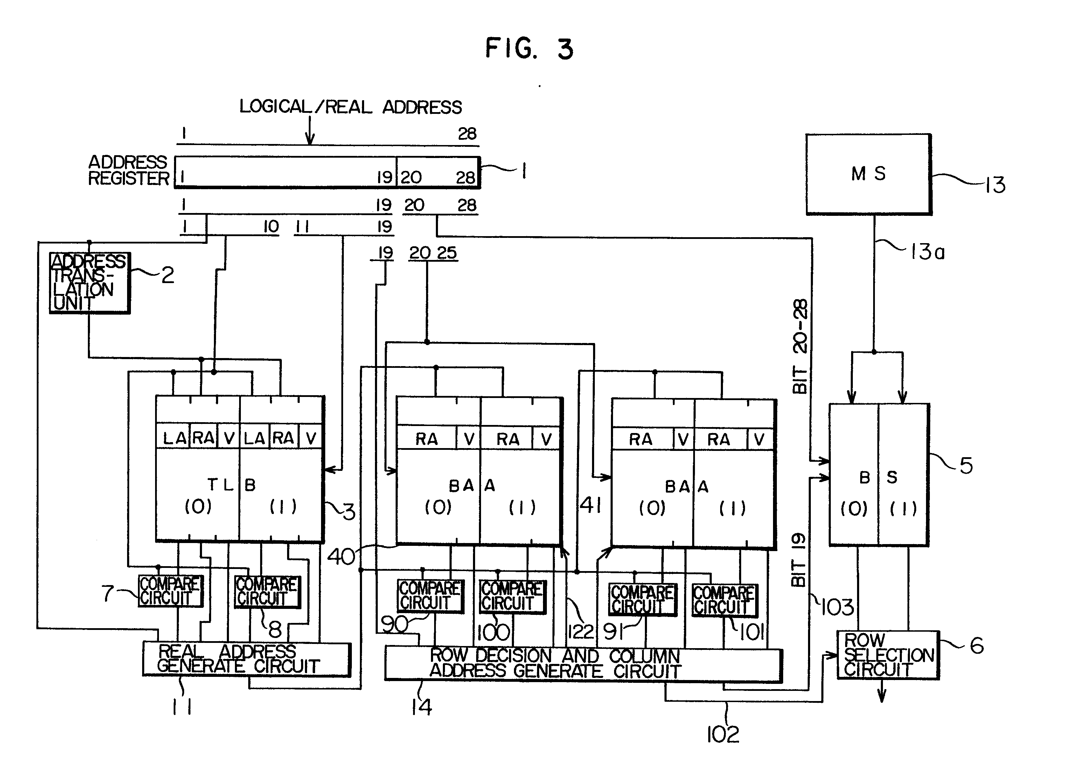

FIG. 3 is a schematic diagram illustrating an embodiment of the present invention in which the block size and the number of rows are the same as for the configuration of FIG. 2. In FIG. 3, an address register 1, an address translation unit 2, an address translation lookaside buffer (TLB) 3, a buffer storage data section 5, a row selection circuit 6, compare circuits 7 and 8, and a real address generate circuit 11 are the same as those of FIG. 2. The TLB 3 retains a translation pair including a logical address and a real address corresponding thereto. The buffer storage data section 5 retains a copy of a portion of the main storage in block units. A first directory 40 and a second directory 41 are used to store the main storage addresses of the blocks retained in the buffer storage data section 5. FIG. 3 is different from FIG. 2 in that a bit 19 which is a portion of a page address of a logical address is included in the column address of the buffer storage data section 5 and that the directory is divided into the first and second directories 40-41. Namely, the bits 20-25 of the logical address are used as the column addresses of the directories 40-41 and the bits 19-28 are used as the column address of the buffer storage data section 5, thereby configuring a buffer storage having a capacity of 16 K bytes without increasing the number of rows. The configuration of the first directory 40 and the compare circuits 90 and 100 and that of the second directory 41 and the compare circuits 91 and 101 are the same as the configuration of the directory 4 and the compare circuits 9-10 of FIG. 2.

When accessing the buffer storage by use of a logical address, the logical address is located in the address register 1. According to the bits 20-25 of the address register 1, the entries of the corresponding rows of the first and second directories 40 and 41 are read, and then the bits 1-19 of the real address of each entry are compared with the output from the real address generate circuit 11 by use of the compare circuits 90, 100, 91, and 101. The result of the comparison, the valid bit of each entry, and the bit 19 of the address register 1 are inputted to the row decision and column address generate circuit 14 to determine a row. As a result, the row including an entry for which the comparison results in a match in the directory specified by the bit 19 of the address register 1 and the valid bit is "1" is notified to the row selection circuit 6. If the bit 19 of the address register 1 is "0", the first directory 40 is specified, whereas if the bit 19 is "1", the second directory is specified. For a data read operation, in concurrence with the read operations on the directories 40-41, the bits 9-28 of the address register 1 are supplied to the buffer storage data section 5. The rows of the pertinent column of the buffer storage data section 5 are read by use of the bits 19-25 and the valid 8-byte data of each row is extracted by the row selection circuit 6. In a case of the store operation, after the row decision and the column address generation are completed, the write operation is effected on the pertinent rows of the column in the buffer storage data section 5.

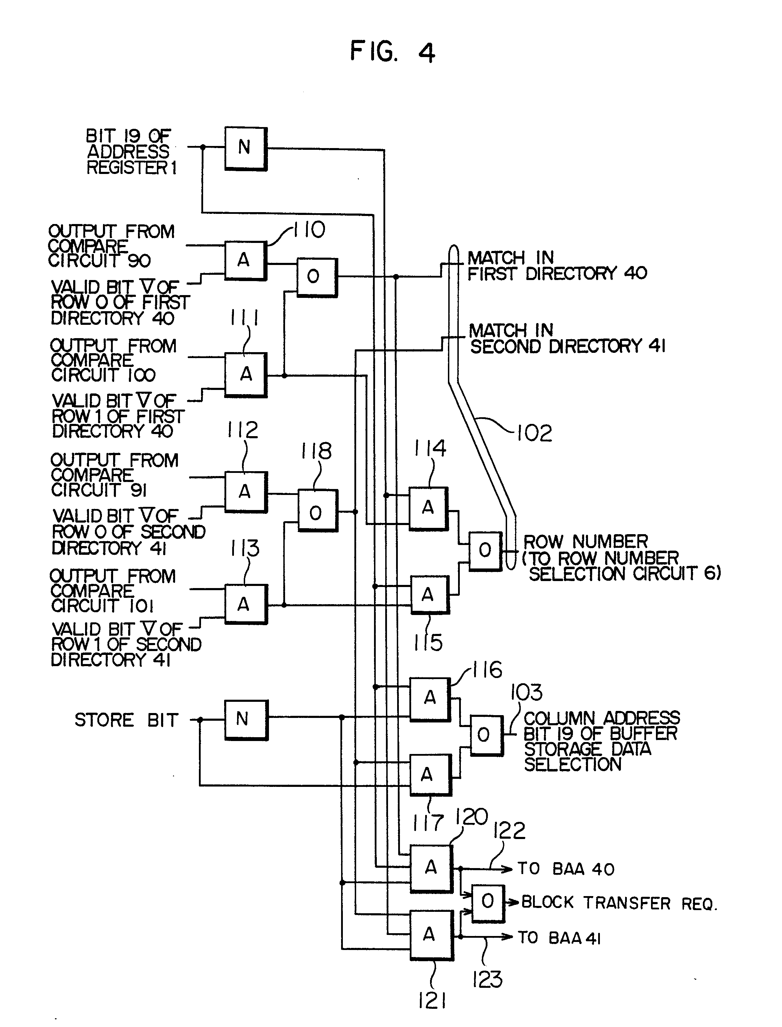

FIG. 4 shows a configuration example of the row decision and column address generate circuit 14. In FIG. 4, the "store bit" is set to "0" and "1" for the read and store operations, respectively; and N indicates a NOT gate, A stands for and AND gate, and O is an OR gate.

In the system of FIG. 3, when the matching condition is satisfied in the compare circuit 90 and the valid bit is "1" for the row 0 of the first directory 40, the AND gate 11 is opened. When the AND gate 110 or 111 is opened, it is indicated that the matching occurs in the first directory 40. The matching in the second directory 41 is similarly indicated through the AND gates 112-113 by use of the compare circuits 91 and 101 and the valid bits V of rows 0-1 of the second directory 41. When the bit 19 of the address register 1 is "0" and the matching takes place on the row 1 side of the first directory 40, the AND gate 114 is opened; whereas, when the bit 19 of the address register 1 is "1" and the matching occurs on the row 1 side of the second directory 41, the AND gate 115 is opened, and hence the row number is determined to be "0". This row number and the match signals of the first and second directories are supplied via a line 102 to the row selection circuit 6 (FIG. 3). For the bit 19 to be used as the column address of the buffer storage data section 5, the AND gate 116 outputs the bit 19 of the address register. The bit 19 is then supplied via a line 103 to the buffer storage data section 5. When the store bit is "1" - (store), the output from the OR gate 118, namely, the match/unmatch signal of the directory 41 is selected by the AND gate 117 and is sent via the line 103 to the buffer storage data section 5. Consequently, when executing a read operation on the buffer storage data section 5, the bits 19-28 of the address register 1 are supplied as the column address. When the matching occurs as a result of the comparison in the first directory 40 and the bit 19 of the address register 1 is "0", or when the matching occurs as a result of the comparison in the second directory 41 and the bit 19 of the address register 2 is "1", then eight bytes of the buffer storage data section specified by the bits 19-28 of the column address and the row number are read. When the matching occurs in first directory 40 and the bit 19 of the address register 1 is "1", or when the matching occurs in the second directory 41 and the bit 19 of the address register 1 is "0", then data cannot be read from the buffer storage data section 5 by use of the bits 19-28 of the column address. The required data exists at a position indicated by a data item obtained by reversing the bit 19 of the column address. In this case, the entry of the directory for which the matching has occurred as a result of the comparison is invalidated. Namely, when the matching takes place in the first directory 40 and the bit 19 of the address register 1 is "1", the AND gate 120 is opened and then the invalidation signal is supplied via the line 122 to the first directory 40, which in turn set the V bit of the entry in the column indicated by the bits 20-25 of the address register 1 to "0" in response to the invalidation signal. Similarly when the matching occurs as a result of the comparison in the second directory 41 and the bit 19 of the address register 1 is "0", the AND gate 121 is opened and the invalidation signal is supplied via the line 123 to the second directory. Since the outputs from the AND gates 120-121 are being supplied to the OR gate 124, the well-known block transfer request is issued when the AND gate 120 or 121 is opened. This block transfer causes a 1-block data to be read from the main storage 13 and to be written via the data path 13 into a location of the buffer storage data section 5 indicated by the bit 19 of the address register 1. At the same time, the real address is registered to the corresponding directory. This enables to read data from the buffer storage data section 5 in response to the subsequent read request. If the matching does not occur in the first and second directories 40-41 as a result of the comparison, a block transfer is initiated to register the real address and the data to the directory indicated by the bit 19 of the address register 1 and a location of the buffer storage data section 5, respectively.

For a store operation, when the matching occurs in the first directory, the bit 19 of the column address is set to "0"; whereas, when the matching occurs in the second directory, the bit 19 of the column address is set to "1" and the store operation is effected on the buffer storage data section 5. If the matching does not occur in the directories, the store operation is not achieved. Through these operations, the matching between the buffer storage and the main storage can be retained in the store-through system.

Although the present invention has been described with reference to an embodiment thereof, it is not restricted by the embodiment, for example, to implement a buffer storage having a larger capacity, high-order bits of the address register bit 19 need only be added as the bits of the column address of the buffer storage data section 5. In general, when the N low-order bits of the page address portion are used, $2^N$ directories are required.

According to the present invention, when a synonim hit occurs in a read operation effected on a buffer storage by use of a logical address, the pertinent entry is invalidated and the registration is accomplished for a position of the buffer storage specified by the logical address, and hence the subsequent read operation can be achieved at a high speed without executing a re-read operation on the buffer storage. Moreover, when a synonim hit occurs in a store operation, the store operation is achieved on a block for which the synonim hit takes place, thereby enabling to guarantee the matching between the buffer storage and the main storage without causing a delay in the processing.

## Claims

1. A buffer storage control system defining an address of a storage by use of a first portion representing a high-order address and a second portion representing a low-order address comprising:

an address register (1) for setting thereto a logical address including the first portion to be translated into a real address and the second portion common to the real address;

address translation means (3, 7, 8, 11) connected to said address register for translating the first portion of said address register into a first portion of the real address and for outputting the first portion of the real address;

a main storage (13) for retaining data;

a buffer storage data section (5) for retaining a copy of a portion of the data stored in said main storage, said buffer storage data section being accessed by use of an address comprising the first portion of said address register including N low-order bits (N being an integer at least equal to 1) and the second portion of said address register including high-order bits;

$2^N$ directory means (40, 41) for retaining the first portion of the real address of the data retained in said buffer storage data section, each said directory means being simultaneously accessed by use of a column address comprising high-order bits of the second portion of said address register, each said directory means including compare means - (90, 91, 100, 101) for comparing the first portion of the real address read by the access with the first portion of the real address from said address translate means and for outputting a match/unmatch signal; and

indicate means (6, 14) operative based on the match/unmatch signal from said each directory means and the N bits from said address register for effecting a read out or store operation of data on said buffer storage data section, said indicate means including means (120, 121) operative in response to an output of the match signal from one of said directory means different from other said directory means specified, when a read request is issued, by a pattern indicated by the N bits for invalidating an entry accessed in said directory means having outputted the match signal.

2. A buffer storage control system according to Claim 1 wherein said indicate means further includes means (24) operative in response to an output from said invalidate means for requesting a data transfer from said main storage to said buffer storage data section.

3. A buffer storage control system according to Claim 2 wherein said indicate means further includes means (117) for setting the pattern of the N bits representing an address to be supplied to said buffer storage data section, when a store request is issued, to correspond to said directory means having outputted the match signal.

# FIG. 1
## PRIOR ART

0 224 168

# FIG. 2 PRIOR ART

FIG. 3

FIG. 4

BIT 19 OF ADDRESS REGISTER 1 — [N]

OUTPUT FROM COMPARE CIRCUIT 90 — [A] 110
VALID BIT V OF ROW 0 OF FIRST DIRECTORY 40 — [O]

OUTPUT FROM COMPARE CIRCUIT 100 — [A] 111
VALID BIT V OF ROW 1 OF FIRST DIRECTORY 40

OUTPUT FROM COMPARE CIRCUIT 91 — [A] 112
VALID BIT V OF ROW 0 OF SECOND DIRECTORY 41 — [O] 118

OUTPUT FROM COMPARE CIRCUIT 101 — [A] 113
VALID BIT V OF ROW 1 OF SECOND DIRECTORY 41

MATCH IN FIRST DIRECTORY 40

MATCH IN SECOND DIRECTORY 41

102

[A] 114
[O] ROW NUMBER (TO ROW NUMBER SELECTION CIRCUIT 6)
[A] 115

STORE BIT — [N]

[A] 116
[O] 103 COLUMN ADDRESS BIT 19 OF BUFFER STORAGE DATA SELECTION
[A] 117

[A] 120 / 122 — TO BAA 40
[O] BLOCK TRANSFER REQ.
[A] 121 / 123 — TO BAA 41